# FASCICULE DE BREVET EUROPEEN

(11) **EP 3 327 607 B1**
(45) Date de publication et mention de la délivrance du brevet: **16.10.2019**
(21) Numéro de dépôt: 17202941.5
(22) Date de dépôt: 22.11.2017
(51) Int. Cl.: G06F 21/55, G06F 12/14, G06F 21/64, G06F 21/71, G06F 21/72, G06F 21/77, H04L 29/06, H04L 9/32

(54) **PROCEDE DE VERIFICATION DE DONNEES**
DATENÜBERPRÜFUNGSVERFAHREN
DATA VERIFICATION METHOD

(30) Priorité: 23.11.2016 FR 1661389
(43) Date de publication de la demande: 30.05.2018
(73) Titulaire: Idemia Identity & Security France, 92130 Issy-les-Moulineaux (FR); Starchip, 13590 Meyreuil (FR)
(72) Inventeur: BERNARD, Jean-Yves, 13590 Meyreuil (FR); FUSELLA, Yves, 13590 Meyreuil (FR); BERTHIER, Maël, 92130 Issy Les Moulineaux (FR); DEL GIUDICE, Lauren, 92130 Issy Les Moulineaux (FR)
(74) Mandataire: Cabinet Le Guen Maillet

(56) Documents cités:
- WO-A1-00/19299
- WO-A1-2016/014919
- US-A1- 2014 006 798

## Description

L'invention concerne un procédé de vérification de données générées par un dispositif électronique compris dans un équipement adapté pour communiquer avec un serveur via un réseau de communication, et un dispositif et un système apte à mettre en oeuvre ledit procédé.

De plus en plus de dispositifs électroniques sont devenus communicants, soit parce qu'ils ont eux-mêmes des capacités de communication, soit parce qu'ils sont connectés ou intégrés à d'autres dispositifs ou équipements électroniques communicants. Dans certains cas, ces dispositifs électroniques stockent et parfois échangent des données sensibles et confidentielles, qu'il est nécessaire de protéger. L'intégrité et l'authenticité de ces données doivent aussi être garanties. En effet, de plus en plus de dispositifs électroniques (cartes à puce, téléphones intelligents (« smartphone » en terminologie anglo-saxonne), ordinateurs, objets connectés, ...) doivent faire face à des attaques matérielles (« hardware » en terminologie anglo-saxonne) ou logicielles (« software » en terminologie anglo-saxonne). Des moyens de protection aussi bien logiciels que matériels ont été développés pour faire face à ces attaques. Ces moyens comprennent des moyens de chiffrement permettant notamment de sécuriser des échanges de données et des architectures matérielles sécurisées permettant de protéger des données ou des programmes stockés en mémoire d'un dispositif électronique.

Les attaques destinées à récupérer des données confidentielles, ou à atteindre l'intégrité ou l'authenticité (incluant le re-jeu) de ces données tirent en général profit de failles des dispositifs électroniques. Par exemple, pour des questions de sécurité, certains dispositifs électroniques comprennent des composants intégrant à la fois une unité de calcul (*i*.*e*. un micro-processeur, un micro-contrôleur, ...) et au moins une mémoire (généralement une mémoire flash) destinée à cette unité de calcul. Dans le cas de technologies avancées, pour des questions de coût et de problèmes techniques liés à une coexistence entre une unité de calcul et une mémoire sur un même composant, les mémoires intégrés (de type flash) sur ces composants ne sont pas envisageables. Seuls certains types de mémoires non volatiles non réinscriptibles sont intégrables.

Ces composants doivent alors utiliser des mémoires externes pour leur fonctionnement. Un bus de communication est alors créé entre l'unité de calcul du composant et la mémoire externe. Ce bus de communication peut constituer une faille de sécurité car il ouvre une porte vers des données sensibles gérées par le dispositif électronique. Cette faille est d'autant plus grande lorsque cette mémoire externe est partagée par d'autres dispositifs électroniques. En effet, on considère généralement qu'il est facile pour un attaquant d'examiner des données et des adresses de données placées sur un bus. Une solution généralement appliquée consiste à chiffrer les données transmises sur un bus. Toutefois, il est connu qu'un chiffrement n'est pas suffisamment efficace face à certaines attaques telles que les attaques par usurpation d'identité (« spoofing attack » en terminologie anglo-saxonne), les attaques par relocalisation (« relocation attack » en terminologie anglo-saxonne) et les attaques par re-jeu (« replay attack » en terminologie anglo-saxonne).

Une attaque par usurpation d'identité consiste à fournir des données aléatoires sur le bus pour causer un disfonctionnement du dispositif électronique.

Une attaque par relocalisation se produit lorsqu'une instruction placée sur le bus par un attaquant est copiée à partir d'une adresse différente.

Une attaque par re-jeu se produit lorsqu'une transmission de données est frauduleusement répétée. Cette attaque est mise en oeuvre par un attaquant qui intercepte les données. L'attaquant est alors en mesure de représenter ces données plus tard et d'en tirer bénéfice (se re-authentifier, restaurer des données antérieures).

Le document WO 2016/014919 Aldécrit la sauvegarde de données dans une mémoire non volatile réinscriptible extérieure avec un compteur et un code d'authentification de message portant sur les données et le compteur. Le compteur est envoyé à un serveur. En cas de perte du compteur après une remise à zéro, le valeur actuelle du compteur est récupérée du serveur pour vérifier les données sauvegardées.

Il est souhaitable de pallier ces inconvénients de l'état de la technique. Il est notamment souhaitable de proposer une méthode et un dispositif permettant d'éviter les attaques par re-jeu.

Selon un premier aspect de l'invention, l'invention concerne un procédé de vérification de données générées par un dispositif électronique compris dans un équipement adapté pour communiquer avec un serveur via un réseau de communication, le dispositif électronique comprenant une unité de calcul, une mémoire à programmation unique non volatile et une mémoire volatile, l'équipement comprenant une mémoire non volatile réinscriptible et un bus de communication permettant au dispositif électronique de stocker des données dans la mémoire non volatile réinscriptible. Le procédé est mis en oeuvre par le dispositif électronique et comprend : créer un canal sécurisé par chiffrement entre l'équipement et le serveur ; obtenir une clé de code d'authentification de message, dite clé d'authentification, du serveur ; charger des données à vérifier et un code d'authentification de message correspondant aux dites données de la mémoire non volatile réinscriptible vers la mémoire volatile, le code d'authentification de message ayant été obtenu par le dispositif électronique à partir de la clé d'authentification et desdites données préalablement au stockage desdites données et du code d'authentification de message dans la mémoire non volatile réinscriptible, le dispositif électronique ayant disposé de la clé d'authentification uniquement au moment de la génération du code d'authentification de message ; vérifier les données à vérifier en utilisant la clé sécrète et le code d'authentification de message et utiliser les données lorsque la vérification est positive.

Ainsi, aucune donnée stockée dans la mémoire non volatile réinscriptible ne peut être utilisée si elle n'a pas été vérifiée positivement à l'aide de la clé d'authentification et du code d'authentification de message ce qui limite les possibilités d'attaque par re-jeu.

Selon un mode de réalisation, les données à vérifier et le code d'authentification de message ont été chiffrés en utilisant une première clé de chiffrement stockée dans la mémoire à programmation unique préalablement à leur stockage dans la mémoire non volatile réinscriptible et sont déchiffrés suite à leur chargement dans la mémoire volatile et préalablement à leur vérification.

Ainsi chaque transfert de données entre la mémoire non volatile réinscriptible et le dispositif électronique par l'intermédiaire du bus de communication est sécurisé.

Selon un mode de réalisation, les données à vérifier ne sont utilisées que lorsque le canal sécurisé entre l'équipement et le serveur peut être créé.

Selon un mode de réalisation, le chiffrement utilisé pour créer le canal sécurisé utilise une deuxième clé de chiffrement stockée dans la mémoire à programmation unique.

Selon un mode de réalisation, la clé d'authentification est obtenue par le dispositif électronique suite à une transmission par le dispositif électronique d'une requête d'obtention de ladite clé d'authentification au serveur.

Selon un mode de réalisation, la clé d'authentification a été préalablement générée par le dispositif électronique et transmise au serveur.

Selon un mode de réalisation, la clé d'authentification a été préalablement générée par le serveur et transmise au dispositif électronique pour la génération de l'information de sécurité.

Selon un mode de réalisation, une nouvelle clé d'authentification différente est générée lors de chaque stockage de données par le dispositif électronique dans la mémoire non volatile réinscriptible ou à intervalles de temps réguliers prédéfinis ou suite à un nombre prédéfini de stockages de données dans la mémoire non volatile réinscriptible ou à des instants déterminés aléatoirement.

L'utilisation d'une clé d'authentification différente ou changeant régulièrement pour la génération du code d'authentification de message lors des stockages de données par le dispositif électronique dans la mémoire non volatile réinscriptible empêche les attaques par re-jeu. Un attaquant qui réussirait à copier des données stockées dans la mémoire non volatile réinscriptible par le dispositif électronique, ne pourrait pas les utiliser dans le cadre d'une attaque par re-jeu. En effet, le code d'authentification de message associé à ces données dans la mémoire non volatile réinscriptible aura peu de chances de correspondre au code d'authentification de message qu'il générera grâce à la clé d'authentification transmise par le serveur. La vérification des données serait alors négative.

Selon un deuxième aspect de l'invention, l'invention concerne un dispositif électronique comprenant des moyens pour mettre en oeuvre le procédé selon le premier aspect.

Selon un troisième aspect de la présente invention, l'invention concerne un équipement apte à communiquer avec un serveur via un réseau de communication comprenant une mémoire non volatile réinscriptible et un dispositif électronique selon le deuxième aspect.

Selon un quatrième aspect de la présente invention, l'invention concerne un système comprenant un serveur et un équipement selon le troisième aspect, l'équipement étant adapté à communiquer avec le serveur via un réseau de communication.

Selon un cinquième aspect de la présente invention, l'invention concerne un programme d'ordinateur, comprenant des instructions pour mettre en oeuvre, par un dispositif, le procédé selon le premier aspect, lorsque ledit programme est exécuté par une unité de calcul dudit dispositif.

Selon un sixième aspect de la présente invention, l'invention concerne des moyens de stockage, stockant un programme d'ordinateur comprenant des instructions pour mettre en oeuvre, par un dispositif, le procédé selon le premier aspect, lorsque ledit programme est exécuté par une unité de calcul dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement une architecture matérielle d'un équipement connecté comprenant un dispositif électronique apte à mettre en oeuvre l'invention ;
- la Fig. 2 illustre schématiquement un exemple d'un procédé selon l'invention pour vérifier des données du dispositif électronique ;
- la Fig. 3 illustre schématiquement un exemple d'un procédé selon l'invention permettant d'invalider d'anciennes données du dispositif électronique.

La description qui suit détaille plus particulièrement un mode de réalisation de la présente invention dans un contexte de téléphone intelligent dans lequel est inséré un dispositif électronique de type carte SIM (« Subscriber Identity Module » en terminologie anglo-saxonne). Les principes décrits ici s'appliquent toutefois à tous types d'équipements connectés à un serveur distant apte à intégrer au moins temporairement un dispositif électronique manipulant des données confidentielles, ledit dispositif devant s'appuyer sur une mémoire externe pour fonctionner. Les principes de l'invention s'appliquent par exemple à un lecteur de cartes à puce ou à un objet connecté.

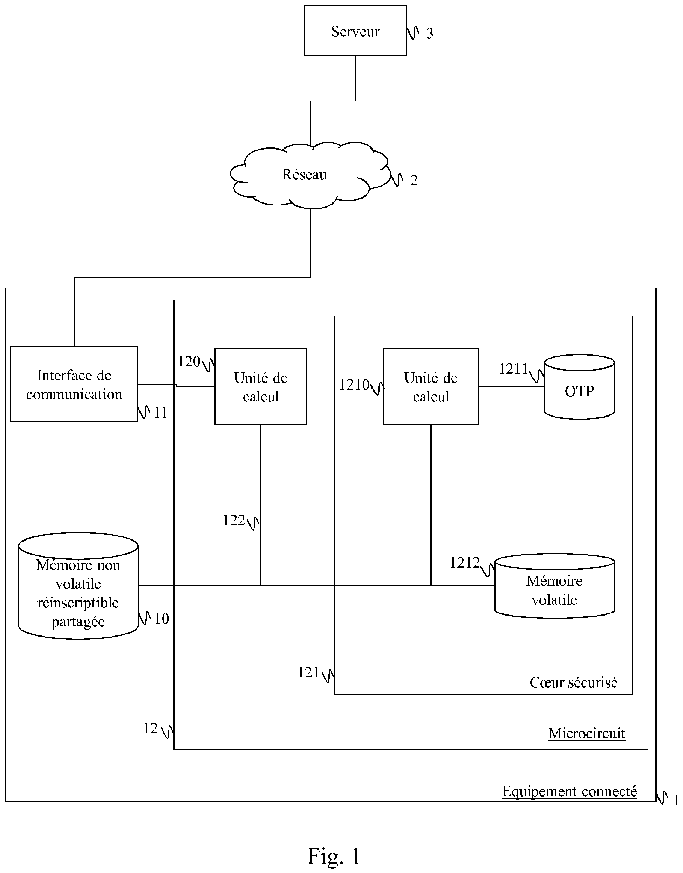

La **Fig. 1** illustre schématiquement une architecture matérielle d'un équipement connecté comprenant un dispositif électronique apte à mettre en oeuvre l'invention.

La Fig. 1 représente un équipement 1 connecté à un serveur 3 par l'intermédiaire d'un réseau 2. L'équipement 1 est par exemple un téléphone intelligent. Le réseau de communication 2 est par exemple un réseau 3G ou 4G.

L'équipement 1 comprend une mémoire non volatile réinscriptible 10 (notée MNVR par la suite) comme par exemple une mémoire EEPROM (« Electronically Erasable Programmable ROM » en terminologie anglo-saxonne), une interface de communication 11 permettant à l'équipement connecté 1 de se connecter au réseau de communication 2 et de communiquer avec le serveur 3 et un circuit électronique 12 tel qu'un microcircuit. Le circuit électronique 12 comprend, reliés par un bus de communication 122, une unité de calcul 120 telle qu'un processeur ou un microcontrôleur et un dispositif électronique 121 qui peut être amovible tel qu'une carte SIM. Le dispositif électronique 121 réalise des opérations critiques et manipule des données confidentielles. Le dispositif électronique 121 est alors une sous partie du circuit électronique 12 fournissant des services de sécurité. Nous appelons par la suite le dispositif électronique 121 *coeur sécurisé.*

Le coeur sécurisé 121 comprend une unité de calcul 1210 telle qu'un processeur ou un microcontrôleur, une mémoire volatile 1212 de type RAM (« Random Access Memory » en terminologie anglo-saxonne) et une mémoire à programmation unique 1211 dite *mémoire OTP* (« One Time Programmable » en terminologie anglo-saxonne) telle qu'une PROM (mémoire programmable à lecture seule, « Programmable Read Only Memory » en terminologie anglo-saxonne).

La mémoire volatile 1212 est utilisée pour stocker temporairement des données, telles que des variables et des résultats intermédiaires de calculs. La mémoire OTP 1211 contient typiquement des instructions causant l'implémentation des opérations critiques mentionnées ci-dessus et de données sensibles telles que des clés de chiffrement.

Le bus 122 permet en outre au coeur sécurisé 121 de communiquer avec l'unité de calcul 120 et la MNVR 10.

Lorsque l'équipement connecté 1 est alimenté en énergie (*i*.*e*. lorsque le circuit électronique 12 et le coeur sécurisé 121 sont alimentés en énergie), l'unité de calcul 1210 est capable d'exécuter les instructions stockées en mémoire OTP 1211.

Comme on peut le constater, le coeur sécurisé 121 ne comprend pas de mémoire non volatile réinscriptible. On considère par ailleurs qu'il est impossible d'ajouter plus de mémoire au coeur sécurisé 121. Le coeur sécurisé 121 pourrait stocker de nouvelles données sensibles en mémoire OTP 1211 au cours de son fonctionnement. Mais, d'une part, la mémoire OTP 1211 est de capacité limitée et d'autre part, le contenu d'une mémoire PROM telle que la mémoire PROM implémentant la mémoire OTP 1211 est inaltérable, c'est-à-dire qu'une fois écrite, les données écrites en mémoire PROM ne peuvent ni être modifiées, ni être effacées. Par conséquent, il y a un risque de saturation rapide de la mémoire OTP 1211. Dans ces conditions, le coeur sécurisé 121 utilise la MNVR 10 pour stocker des données sensibles.

Dans un mode de réalisation, l'unité de calcul 1210 du coeur sécurisé 121 est esclave de l'unité de calcul du microcircuit 120. De cette manière, le coeur sécurisé 121 ne peut fonctionner que sous le contrôle de l'unité de calcul 120.

Dans un mode de réalisation, l'unité de calcul 1210 du coeur sécurisé 121 est au moins partiellement autonome. Ainsi, certaines opérations mises en oeuvre par le coeur sécurisé peuvent être mises en oeuvre sans interaction avec l'unité de calcul 120.

Un stockage dans la MNVR 10 implique que des données sensibles doivent transiter par le bus 122. Une telle configuration constitue une faille de sécurité que des attaquants pourraient exploiter, d'autant plus que la MNVR 10 peut être partagée par d'autres dispositifs de l'équipement connecté 1, tel que par exemple, l'unité de calcul 120.

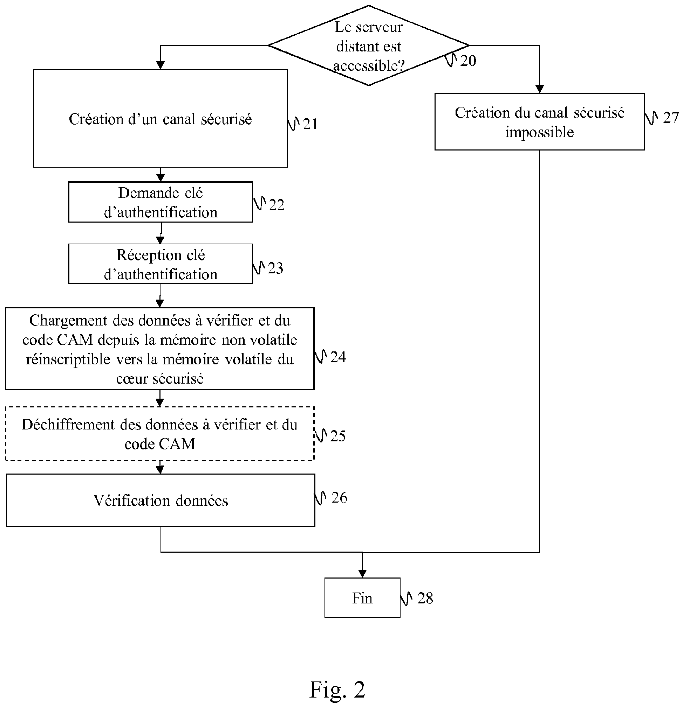

La **Fig. 2** illustre schématiquement un exemple d'un procédé selon l'invention pour vérifier des données du dispositif électronique 121.

Dans un mode de réalisation, le procédé décrit en relation avec la Fig. 2 est mis en oeuvre lorsque l'unité de calcul 1210 du coeur sécurisé 121 doit utiliser des données qu'il a préalablement stockées dans la MNVR 10. Il est alors nécessaire de vérifier ces données avant leur utilisation. De cette manière, l'unité de calcul 1210 du coeur sécurisé 121 s'assure que les données dont il a besoin, stockées dans la MNVR 10, n'ont pas été modifiées par un attaquant.

Lors d'une étape 20, l'unité de calcul 1210 du coeur sécurisé 121 vérifie qu'un canal sécurisé peut être créé entre le serveur 3 et l'équipement 1 via le réseau de communication 2. Pour ce faire, l'unité de calcul 1210 du coeur sécurisé 121 fait un test de communication entre le serveur 3 et l'équipement 1. Par exemple, l'unité de calcul 1210 provoque un envoi par l'équipement 1 d'une requête destinée au serveur 3. Lorsqu'une réponse à cette requête est reçue par l'équipement 1, l'unité de calcul 1210 du coeur sécurisé 121 considère qu'un canal sécurisé peut être créé entre l'équipement 1 et le serveur 3 lors d'une étape 21.

Si aucune réponse à la requête n'est reçue par l'équipement 1, l'unité de calcul 1210 du coeur sécurisé considère lors d'une étape 27 qu'il n'est pas possible de créer un canal sécurisé entre l'équipement 1 et le serveur 3. Dans ce cas, l'unité de calcul 1210 du coeur sécurisé 121 n'utilise pas des données stockées dans la MNVR 10 qu'il n'a pas pu vérifier. L'étape 27 est alors suivie d'une étape 28 qui met fin au procédé.

Lors de l'étape 21, l'unité de calcul 1210 du coeur sécurisé 121 crée un canal sécurisé entre l'équipement 1 et le serveur 3. Pour ce faire, chaque donnée transmise sur le réseau de communication 2 entre l'équipement 1 et le serveur 3 est chiffrée. Un algorithme de chiffrement est alors utilisé tel que par exemple l'algorithme 3DES (« Triple Data Encryption Standard (3DES) » RFC 1851, https://tools.ietf.org/html/rfc1851) ou l'algorithme AES (« Advanced Encryption Standard », RFC 3565, https://tools.ietf.org/html/rfc3565). Cet algorithme de chiffrement utilise une première clé de chiffrement unique stockée dans la mémoire OTP 1211. A partir de l'étape 21 et jusqu'à la fin de la mise en oeuvre du procédé décrit en relation avec la Fig. 2, chaque communication entre l'équipement 1 et le serveur 3 est sécurisée.

Dans une étape 22, l'unité de calcul 1210 du coeur sécurisé 121 provoque un envoi par l'équipement 1 d'une requête pour obtenir une clé d'un code d'authentification de message, dite clé d'authentification, du serveur 3. Un Code d'Authentification de Message (« Message Authentification Code (MAC) » en terminologie anglo-saxonne), que nous appelons *code CAM* par la suite, est obtenu en appliquant une fonction de hachage cryptographique en combinaison avec une clé d'authentification à des données. Un code CAM permet de vérifier simultanément des données en termes d'intégrité et d'authenticité.

Dans une étape 23, en réponse à la requête transmise lors de l'étape 22, l'unité de calcul 1210 du coeur sécurisé 121 reçoit une requête de la part du serveur 3 comprenant la clé d'authentification demandée.

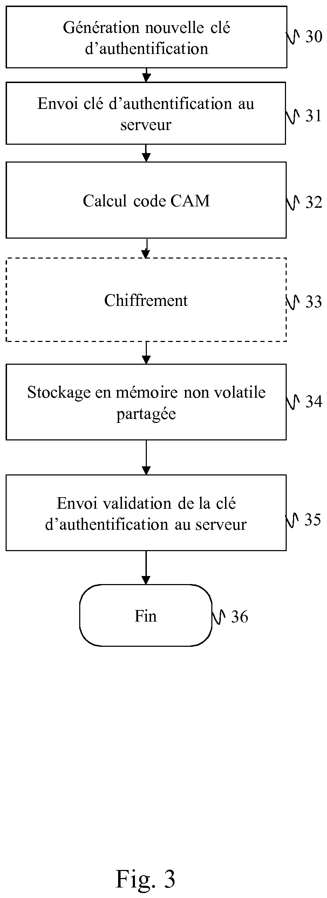

Dans une étape 24, l'unité de calcul 1210 du coeur sécurisé 121 charge des données à vérifier et un code CAM correspondant auxdites données de la mémoire MNVR 10 vers la mémoire volatile 1212. Comme nous l'expliquons par la suite en relation avec la Fig. 3, le code CAM a été obtenu par le coeur sécurisé 121 à partir de la clé d'authentification et des données à vérifier préalablement au stockage des données à vérifier et du code CAM dans la mémoire MNVR 10. Toutefois, pour une question de sécurité, la clé d'authentification n'a pas été conservée par le coeur sécurisé 121 après la génération du code CAM. De cette manière, le coeur sécurisé dispose de la clé d'authentification uniquement au moment de la génération du code CAM ce qui empêche toute tentative de récupération de la clé d'authentification au niveau du coeur sécurisé.

Dans une étape 26, l'unité de calcul 1210 du coeur sécurisé 121 vérifie les données à vérifier en utilisant la clé sécrète et le code CAM chargé depuis la mémoire MNVR 10. Nous appelons le code CAM chargé depuis la mémoire MNVR, *premier code CAM.* Pour ce faire, l'unité de calcul 1210 du coeur sécurisé 121 applique la fonction de hachage cryptographique utilisée pour calculer le premier code CAM en combinaison avec la clé d'authentification aux données à vérifier. L'unité de calcul 1210 du coeur sécurisé 121 obtient alors un nouveau code CAM, appelé *deuxième code CAM.* Il compare ensuite le premier et le deuxième codes CAM. Lorsque le premier et le deuxième codes CAM sont identiques, la vérification est positive. Lorsque la vérification est positive, l'unité de calcul 1210 du coeur sécurisé 121 peut utiliser les données ainsi vérifiées. Sinon, l'unité de calcul 1210 du coeur sécurisé 121 s'interdit d'utiliser ces données.

L'étape 26 est suivie d'une étape 28 qui met fin au procédé.

Dans un mode de réalisation, toutes les données et le code CAM correspondant à ces données stockées par l'unité de calcul 1210 du coeur sécurisé 121 dans la mémoire MNVR 10 sont chiffrés par un algorithme de chiffrement. De cette manière, chaque transfert de données entre le coeur sécurisé 121 et la mémoire MNVR 10 est sécurisé. L'algorithme de chiffrement appliqué sur les données et le code CAM stockés dans la mémoire MNVR 10 peut être le même que celui utilisé pour créer le canal sécurisé. Cet algorithme de chiffrement utilise toutefois une seconde clé de chiffrement unique stockée en mémoire OTP 1211. Dans ce mode de réalisation, le procédé décrit en relation avec la Fig. 2 comprend une étape 25, intermédiaire entre l'étape 24 et l'étape 26, au cours de laquelle l'unité de calcul 1210 du coeur sécurisé 121 déchiffre les données à vérifier et le code CAM chargés dans la mémoire volatile 1212.

Dans un mode de réalisation, le procédé décrit en relation avec la Fig. 2 est mis en oeuvre de manière régulière, par exemple selon une période prédéfinie, par l'unité de calcul 1210 du coeur sécurisé 121. De cette manière, l'unité de calcul 1210 du coeur sécurisé 121 vérifie régulièrement les données qu'elle a stockées dans la mémoire MNVR 10 au lieu de les vérifier uniquement quand elle en a besoin.

Dans un mode de réalisation, au premier lancement du coeur sécurisé 121, la mémoire MNVR 10 comprend des données sensibles, ces données sensibles n'ayant pas été fournies par l'unité de calcul 1210 du coeur sécurisé 121 à la mémoire MNVR 10, mais introduites dans la mémoire MNVR 10 lors de la fabrication de l'équipement 1. Ces données sensibles sont associées à un code CAM généré en utilisant une clé d'authentification, dite clé d'authentification initiale. Pour permettre à l'unité de calcul 1210 du coeur sécurisé 121 de vérifier ces données, le serveur connaît cette clé d'authentification initiale et la fournit à l'unité de calcul 1210 du coeur sécurisé 121 sur requête.

Dans un mode de réalisation, les premières et deuxièmes clés de chiffrement ont été introduites dans la mémoire OTP 1211 lors de la fabrication du coeur sécurisé.

La **Fig. 3** illustre schématiquement un exemple d'un procédé selon l'invention permettant d'invalider d'anciennes données du dispositif électronique.

Un objectif du procédé décrit en relation avec la Fig. 3 est d'empêcher toute attaque par re-jeu. Ainsi, lors de chaque stockage de nouvelles données par l'unité de calcul 1210 du coeur sécurisé 121 dans la mémoire MNVR 10, le code CAM associé à l'ensemble des données stocké par l'unité de calcul 1210 du coeur sécurisé 121 dans la mémoire MNVR 10 est modifié. De cette manière, un attaquant qui réussirait à copier des données précédemment stockées dans la mémoire MNRV 10, ne pourrait pas les réutiliser puisqu'elles ne seraient pas associées à un code CAM correct.

Le procédé décrit en relation avec la Fig. 3 est donc mis en oeuvre à chaque fois que l'unité de calcul 1210 du coeur sécurisé 121 doit stocker de nouvelles données dans la mémoire MNVR 10.

Dans une étape 30, l'unité de calcul 1210 du coeur sécurisé 121 génère une nouvelle clé d'authentification différente des clés précédentes. L'unité de calcul 1210 du coeur sécurisé 121 applique par exemple pour cela la recommandation NIST SP 800-90A (recommandation pour la génération de nombres aléatoires utilisant des générateurs de bits aléatoires : «Recommendation for Random Number Generation Using Deterministic Random Bit Generators » en terminologie anglo-saxonne). Cette clé d'authentification est temporairement stockée en mémoire volatile 1212. Comme lors des étapes 20 et 21, l'unité de calcul 1210 du coeur sécurisé 121 vérifie qu'un canal sécurisé peut être créé entre l'équipement 1 et le serveur 3 et, lorsque c'est possible, crée ce canal sécurisé. Chaque échange de données entre l'unité de calcul 1210 du coeur sécurisé 121 et le serveur 3 dans le cadre du procédé décrit en relation avec la Fig. 3 utilise alors le canal sécurisé. Si le canal sécurisé ne peut pas être créé, l'unité de calcul 1210 du coeur sécurisé 121 se met en attente de pouvoir créer ce canal avant de pouvoir poursuivre le procédé par une étape 31.

Lors de l'étape 31, l'unité de calcul 1210 du coeur sécurisé 121 provoque un envoi par l'équipement 1 de la clé d'authentification au serveur 3. Lorsque le serveur 3 reçoit la clé d'authentification, il stocke cette clé d'authentification jusqu'à ce que cette clé soit remplacée par une autre clé d'authentification.

Lors d'une étape 32, l'unité de calcul 1210 du coeur sécurisé 121 calcule un code CAM pour l'ensemble des données stocké en mémoire MNVR en utilisant la clé d'authentification générée lors de l'étape 30. L'ensemble des données comprend des données précédemment stockées par l'unité de calcul 1210 du coeur sécurisé 121 dans la mémoire MNVR 10 et les nouvelles données.

Dans une étape 34, l'unité de calcul 1210 du coeur sécurisé 121 stocke l'ensemble des données et le code CAM calculé à partir de ces données et de la clé d'authentification dans la mémoire MNVR 10.

Lors d'une étape 35, l'unité de calcul 1210 du coeur sécurisé 121 envoie une requête vers le serveur 3 pour valider la clé d'authentification reçue en étape 31.

Les étapes 34 et 36 sont réalisées sous transaction pour garantir une atomicité.

Ces étapes peuvent être interrompues par exemple par une coupure d'alimentation. Si ces étapes sont interrompues, les précédentes données, chiffrées avec l'ancienne clé, sont restaurées.

L'étape 35 est suivie d'une étape 36 au cours de laquelle l'unité de calcul 1210 du coeur sécurisé 121 met fin au procédé.

Lors de l'étape 36, l'unité de calcul 1210 du coeur sécurisé 121 supprime la clé d'authentification de la mémoire volatile 1212. La clé d'authentification n'étant plus disponible sur l'équipement 1, elle ne peut plus être récupérée frauduleusement par un attaquant ce qui limite encore les possibilités d'attaque par re-jeu.

Comme nous l'avons vu plus haut, dans un mode de réalisation, les données et le code CAM destinés à être stockés par l'unité de calcul 1210 du coeur sécurisé 121 dans la mémoire MNVR 10 sont chiffrés. Dans ce cas, le procédé décrit en relation avec la Fig. 3 comprend une étape 33 de chiffrement intermédiaire entre l'étape 32 et l'étape 34. Au cours de cette étape, l'ensemble des données et le code CAM sont chiffrés par l'unité de calcul 1210 du coeur sécurisé 121.

Dans le procédé décrit en relation avec la Fig. 3, nous avons décrit qu'une nouvelle clé d'authentification différente était générée par l'unité de calcul 1210 du coeur sécurisé 121 à chaque fois que l'unité de calcul 1210 du coeur sécurisé 121 doit stocker de nouvelles données dans la mémoire MNVR 10. Dans un mode de réalisation, l'unité de calcul 1210 du coeur sécurisé 121 ne génère pas une nouvelle clé d'authentification à chaque fois que l'unité de calcul 1210 du coeur sécurisé 121 doit stocker de nouvelles données dans la mémoire MNVR 10, mais soit à intervalles de temps réguliers prédéfinis, soit suite à un nombre prédéfini de stockages de nouvelles données dans la mémoire MNVR 10. Dans un autre mode de réalisation, l'unité de calcul 1210 du coeur sécurisé 121 génère une nouvelle clé d'authentification à des instants déterminés aléatoirement par l'unité de calcul 1210 du coeur sécurisé 121. Suite à sa génération, la clé d'authentification ainsi générée est transmise au serveur 3. Lors de la première utilisation de la clé d'authentification, les étapes 30 à 36 sont mises en oeuvre par l'unité de calcul du coeur sécurisé. Toutefois, puisque lors de l'étape 36, l'unité de calcul 1210 du coeur sécurisé 121 supprime la clé d'authentification de la mémoire volatile 1212, l'unité de calcul 1210 du coeur sécurisé 121 ne dispose plus de cette clé d'authentification pour une éventuelle réutilisation. Dans ce cas, lorsque l'unité de calcul 1210 du coeur sécurisé 121 souhaite réutiliser une clé déjà utilisée précédemment, il redemande la dernière clé d'authentification générée au serveur 3. Le serveur 3 renvoie alors cette clé d'authentification en utilisant un canal sécurisé. Lors d'une réutilisation d'une clé d'authentification déjà utilisée pour stocker des données dans la mémoire MNVR 10, l'unité de calcul 1210 du coeur sécurisé 121 ne met pas en oeuvre les étapes 30 et 31 du procédé décrit en relation avec la Fig. 3. Après avoir reçu la dernière clé d'authentification générée du serveur 3, l'unité de calcul 1210 du coeur sécurisé 121 met en oeuvre les étapes 32 à 36. Par ailleurs, dans ces modes de réalisation, bien que la clé d'authentification ne soit pas changée à chaque stockage de données dans la mémoire MNVR 10, la probabilité qu'une attaque par re-jeu réussisse reste faible.

Dans un mode de réalisation, la clé d'authentification n'est pas générée par l'unité de calcul 1210 du coeur sécurisé 121 mais par le serveur 3. Pour ce faire, à chaque fois que l'unité de calcul 1210 du coeur sécurisé 121 doit stocker des données dans la mémoire MNVR 10, elle provoque l'envoi par l'équipement 1 d'une requête visant à obtenir une clé d'authentification de la part du serveur 3. Là encore, le serveur 3 peut ne pas générer une nouvelle clé d'authentification pour chaque stockage de données dans la mémoire MNVR 10. Ainsi le coeur sécurisé 121 ne possède pas un algorithme permettant de générer une clé d'authentification ce qui renforce la sécurité contre les attaques. Là encore, le coeur sécurisé 121 ne conserve pas la clé d'authentification et dispose de la clé d'authentification uniquement au moment de la génération du code CAM ce qui empêche toute tentative de récupération de la clé d'authentification au niveau du coeur sécurisé 121.

## Revendications

1. Procédé de vérification de données générées par un dispositif électronique (121) compris dans un équipement (1) adapté pour communiquer avec un serveur (3) via un réseau de communication (2), le dispositif électronique (121) comprenant une unité de calcul (1210), une mémoire à programmation unique (1211) et une mémoire volatile (1212), l'équipement (1) comprenant une mémoire non volatile réinscriptible (10) et un bus de communication (122) permettant au dispositif électronique (121) de stocker des données dans la mémoire non volatile réinscriptible, **caractérisé en ce que** le procédé est mis en oeuvre par le dispositif électronique et comprend :
créer (21) un canal sécurisé par chiffrement entre l'équipement (1) et le serveur (3) ;
obtenir (22,23) une clé de code d'authentification de message, dite clé d'authentification, du serveur (3) ;
charger (24) des données à vérifier et un code d'authentification de message correspondant auxdites données de la mémoire non volatile réinscriptible (10) vers la mémoire volatile (1212), le code d'authentification de message ayant été obtenu par le dispositif électronique (121) à partir de la clé d'authentification et desdites données préalablement au stockage desdites données et du code d'authentification de message dans la mémoire non volatile réinscriptible (10), le dispositif électronique ayant disposé de la clé d'authentification uniquement au moment de la génération du code d'authentification de message;
vérifier (26) les données à vérifier en utilisant la clé d'authentification et le code d'authentification de message et utiliser les données lorsque la vérification est positive.

2. Procédé selon la revendication 1, **caractérisé en ce que** les données à vérifier et le code d'authentification de message ont été chiffrés en utilisant une première clé de chiffrement stockée dans la mémoire à programmation unique préalablement à leur stockage dans la mémoire non volatile réinscriptible (10) et sont déchiffrés (25) suite à leur chargement dans la mémoire volatile (1212) et préalablement à leur vérification.

3. Procédé selon la revendication 1 ou 2, **caractérisé en ce que** les données à vérifier ne sont utilisées que lorsque le canal sécurisé entre l'équipement (1) et le serveur (3) peut être créé.

4. Procédé selon la revendication 1, 2 ou 3, **caractérisé en ce que** le chiffrement utilisé pour créer le canal sécurisé utilise une deuxième clé de chiffrement stockée dans la mémoire à programmation unique (1211).

5. Procédé selon l'une quelconque des revendications précédentes, **caractérisé en ce que** la clé d'authentification est obtenue par le dispositif électronique (121) suite à une transmission (22) par le dispositif électronique (121) d'une requête d'obtention de ladite clé d'authentification au serveur (3).

6. Procédé selon l'une quelconque des revendications précédentes, **caractérisé en ce que** la clé d'authentification a été préalablement générée (30) par le dispositif électronique et transmise (31) au serveur (3).

7. Procédé selon l'une quelconque des revendications 1 à 5, **caractérisé en ce que** la clé d'authentification a été préalablement générée par le serveur (3) et transmise au dispositif électronique (1) pour la génération de l'information de sécurité.

8. Procédé selon l'une quelconque des revendications précédentes, **caractérisé en ce qu'**une nouvelle clé d'authentification différente est générée lors de chaque stockage de données (34) par le dispositif électronique (121) dans la mémoire non volatile réinscriptible (10) ou à intervalles de temps réguliers prédéfinis ou suite à un nombre prédéfini de stockages de données dans la mémoire non volatile réinscriptible (10) ou à des instants déterminés aléatoirement.

9. Dispositif électronique (121) comprenant des moyens pour mettre en oeuvre le procédé selon l'une quelconque des revendications 1 à 8.

10. Equipement (1) apte à communiquer avec un serveur (3) via un réseau de communication (2) comprenant une mémoire non volatile réinscriptible et un dispositif électronique (121) selon la revendication 9.

11. Système comprenant un serveur (3) et un équipement (1) selon la revendication 10, l'équipement (1) étant adapté à communiquer avec le serveur (3) via un réseau de communication (2).

12. Programme d'ordinateur, **caractérisé en ce qu'**il comprend des instructions pour mettre en oeuvre, par un dispositif (121), le procédé selon l'une quelconque des revendications 1 à 8, lorsque ledit programme est exécuté par une unité de calcul (1210) dudit dispositif (121).

13. Moyens de stockage (1211), **caractérisés en ce qu'**ils stockent un programme d'ordinateur comprenant des instructions pour mettre en oeuvre, par un dispositif (121), le procédé selon l'une quelconque des revendications 1 à 8, lorsque ledit programme est exécuté par une unité de calcul (1210) dudit dispositif (121).

## Patentansprüche

1. Verfahren zur Überprüfung von Daten, die von einer elektronischen Vorrichtung (121) generiert wurden, die in einer Einrichtung (1) enthalten ist, die dazu eingerichtet ist, mit einem Server (3) über ein Kommunikationsnetzwerk (2) zu kommunizieren, wobei die elektronische Vorrichtung (121) eine Recheneinheit (1210), einen einmalig programmierbaren Speicher (1211) und einen flüchtigen Speicher (1212) umfasst, wobei die Einrichtung (1) einen wiederbeschreibbaren nichtflüchtigen Speicher (10) und einen Kommunikationsbus (122) umfasst, der es der elektronischen Vorrichtung (121) ermöglicht, Daten im wiederbeschreibbaren nichtflüchtigen Speicher zu speichern, **dadurch gekennzeichnet, dass** das Verfahren von der elektronischen Vorrichtung ausgeführt wird und Folgendes umfasst:
Einrichten (21) eines sicheren Kanals durch Verschlüsselung zwischen der Einrichtung (1) und dem Server (3);
Erhalten (22, 23) eines Nachrichtenauthentifizierungscodeschlüssels, Authentifizierungsschlüssel genannt, vom Server (3);
Laden (24) der zu überprüfenden Daten und eines den Daten entsprechenden Nachrichtenauthentifizierungscodes aus dem wiederbeschreibbaren nichtflüchtigen Speichers (10) zum flüchtigen Speicher (1212) hin, wobei der Nachrichtenauthentifizierungscode von der elektronischen Vorrichtung (121) ausgehend von dem Authentifizierungsschlüssel und den Daten vor dem Speichern der Daten und des Nachrichtenauthentifizierungscodes im wiederbeschreibbaren nichtflüchtigen Speicher (10) erhalten worden ist, wobei die elektronische Vorrichtung über den Authentifizierungsschlüssel nur zum Zeitpunkt des Generierens des Nachrichtenauthentifizierungscodes verfügt hat;
Überprüfen (26) der zu überprüfenden Daten unter Verwendung des Authentifizierungsschlüssels und des Nachrichtenauthentifizierungscodes und Verwenden der Daten, wenn die Überprüfung positiv ist.

2. Verfahren nach Anspruch 1, **dadurch gekennzeichnet, dass** die zu überprüfenden Daten und der Nachrichtenauthentifizierungscode unter Verwendung eines ersten Verschlüsselungsschlüssels, der in dem einmalig programmierbaren Speicher gespeichert ist, vor ihrer Speicherung im wiederbeschreibbaren nichtflüchtigen Speicher (10) verschlüsselt worden sind und nach ihrem Laden in den flüchtigen Speicher (1212) und vor ihrer Überprüfung entschlüsselt (25) werden.

3. Verfahren nach Anspruch 1 oder 2, **dadurch gekennzeichnet, dass** die zu überprüfenden Daten nur verwendet werden, wenn der sichere Kanal zwischen der Einrichtung (1) und dem Server (3) eingerichtet werden kann.

4. Verfahren nach Anspruch 1, 2 oder 3, **dadurch gekennzeichnet, dass** die zum Einrichten des sicheren Kanals verwendete Verschlüsselung einen zweiten Verschlüsselungsschlüssel verwendet, der in dem einmalig programmierbaren Speicher (1211) gespeichert ist.

5. Verfahren nach einem der vorhergehenden Ansprüche, **dadurch gekennzeichnet, dass** der Authentifizierungsschlüssel von der elektronischen Vorrichtung (121) nach einer Übertragung (22) einer Anforderung des Erhaltens dieses Authentifizierungsschlüssels durch die elektronische Vorrichtung (121) an den Server (3) erhalten wird.

6. Verfahren nach einem der vorhergehenden Ansprüche, **dadurch gekennzeichnet, dass** der Authentifizierungsschlüssel zuvor von der elektronischen Vorrichtung generiert (30) und an den Server (3) übertragen (31) worden ist.

7. Verfahren nach einem der Ansprüche 1 bis 5, **dadurch gekennzeichnet, dass** der Authentifizierungsschlüssel zuvor vom Server (3) generiert und zur Generierung der Sicherheitsinformation an die elektronische Vorrichtung (1) übertragen worden ist.

8. Verfahren nach einem der vorhergehenden Ansprüche, **dadurch gekennzeichnet, dass** bei jeder Datenspeicherung (34) durch die elektronische Vorrichtung (121) im wiederbeschreibbaren nichtflüchtigen Speicher (10) oder in vorgegebenen regelmäßigen Zeitabständen oder nach einer vorgegebenen Anzahl von Datenspeicherungen im wiederbeschreibbaren nichtflüchtigen Speicher (10) oder zu zufällig bestimmten Zeitpunkten ein neuer unterschiedlicher Authentifizierungsschlüssel generiert wird.

9. Elektronische Vorrichtung (121), die Mittel zum Ausführen des Verfahrens nach einem der Ansprüche 1 bis 8 umfasst.

10. Einrichtung (1), die geeignet ist, mit einem Server (3) über ein Kommunikationsnetzwerk (2) zu kommunizieren, umfassend einen wiederbeschreibbaren nichtflüchtigen Speicher und eine elektronische Vorrichtung (121) nach Anspruch 9.

11. System, das einen Server (3) und ein Einrichtung (1) nach Anspruch 10 umfasst, wobei die Einrichtung (1) geeignet ist, mit dem Server (3) über ein Kommunikationsnetzwerk (2) zu kommunizieren.

12. Computerprogramm, **dadurch gekennzeichnet, dass** es Anweisungen umfasst, um das Verfahren nach einem der Ansprüche 1 bis 8 durch eine Vorrichtung (121) auszuführen, wenn das Programm von einer Recheneinheit (1210) der Vorrichtung (121) abgearbeitet wird.

13. Speichermedien (1211), **dadurch gekennzeichnet, dass** sie ein Computerprogramm speichern, das Anweisungen umfasst, um das Verfahren nach einem der Ansprüche 1 bis 8 durch eine Vorrichtung (121) auszuführen, wenn das Programm von einer Recheneinheit (1210) der Vorrichtung (121) abgearbeitet wird.

## Claims

1. Method for verifying data generated by an electronic device (121) included in an item of equipment (1) adapted to communicate with a server (3) via a communication network (2), the electronic device (121) comprising a computation unit (1210), a one-time programmable memory (1211) and a volatile memory (1212), the item of equipment (1) comprising a rewritable nonvolatile memory (10) and a communication bus (122) allowing the electronic device (121) to store data in the rewritable nonvolatile memory, **characterized in that** the method is implemented by the electronic device and comprises:
creating (21) a secure channel by encipherment between the item of equipment (1) and the server (3);
obtaining (22,23) a message authentication key code, termed the authentication key, of the server (3);
loading (24) data to be verified and a message authentication code corresponding to the said data of the rewritable nonvolatile memory (10) into the volatile memory (1212), the message authentication code having been obtained by the electronic device (121) on the basis of the authentication key and of the said data prior to the storage of the said data and of the message authentication code in the rewritable nonvolatile memory (10), the electronic device having employed the authentication key solely at the moment of generation of the message authentication code;
verifying (26) the data to be verified by using the authentication key and the message authentication code and using the data when verification is positive.

2. Method according to Claim 1, **characterized in that** the data to be verified and the message authentication code have been enciphered by using a first encipherment key stored in the one-time programmable memory prior to their storage in the rewritable nonvolatile memory (10) and are deciphered (25) subsequent to their loading into the volatile memory (1212) and prior to their verification.

3. Method according to Claim 1 or 2, **characterized in that** the data to be verified are used only when the secure channel between the item of equipment (1) and the server (3) can be created.

4. Method according to Claim 1, 2 or 3, **characterized in that** the encipherment used to create the secure channel uses a second encipherment key stored in the one-time programmable memory (1211).

5. Method according to any one of the preceding claims, **characterized in that** the authentication key is obtained by the electronic device (121) subsequent to a transmission (22) by the electronic device (121) of a petition for obtaining the said authentication key to the server (3).

6. Method according to any one of the preceding claims, **characterized in that** the authentication key has been previously generated (30) by the electronic device and transmitted (31) to the server (3).

7. Method according to any one of Claims 1 to 5, **characterized in that** the authentication key has been previously generated by the server (3) and transmitted to the electronic device (1) for the generation of the security information.

8. Method according to any one of the preceding claims, **characterized in that** a new different authentication key is generated during each storage of data (34) by the electronic device (121) in the rewritable nonvolatile memory (10) or at predefined regular time intervals or subsequent to a predefined number of storages of data in the rewritable nonvolatile memory (10) or at randomly determined instants.

9. Electronic device (121) comprising means for implementing the method according to any one of Claims 1 to 8.

10. Item of equipment (1) able to communicate with a server (3) via a communication network (2) comprising a rewritable nonvolatile memory and an electronic device (121) according to Claim 9.

11. System comprising a server (3) and an item of equipment (1) according to Claim 10, the item of equipment (1) being adapted to communicate with the server (3) via a communication network (2).

12. Computer program, **characterized in that** it comprises instructions for implementing, by a device (121), the method according to any one of Claims 1 to 8, when the said program is executed by a computation unit (1210) of the said device (121).

13. Storage means (1211), **characterized in that** they store a computer program comprising instructions for implementing, by a device (121), the method according to any one of Claims 1 to 8, when the said program is executed by a computation unit (1210) of the said device (121).
